# EUROPEAN PATENT APPLICATION

(11) **EP 2 251 655 A1**
(43) Date of publication of application: **17.11.2010**
(21) Application number: 10162557.2
(22) Date of filing: 11.05.2010
(51) Int. Cl.: G01F 11/28, B65D 75/58

(54) **Dispensing Container**

(30) Priority: 14.05.2009 GB 0908273
(71) Applicant: Coda Plastics Limited, Norwich Norfolk NR28 0AJ (GB)
(72) Inventor: Gray, Christopher Michael, North Walsham, Norfolk NR28 0AJ (GB)
(74) Representative: Wilson, Peter David George

(57) **Abstract**

A dispensing container for use with a pouch-type package having a chamber with a first opening for dispensing material and a second opening connected to a conduit; and a pouch connector for hermetically connecting the container to a pouch so that the conduit is in fluid connection with the interior of said pouch.

## Description

### Field of the Invention

The invention relates to dispensing containers for use with pouches, especially those formed by lamination of sheet material, and intended for storage of flowable materials such as liquids, granules and powders.

### Background and Prior art Known to the Applicant

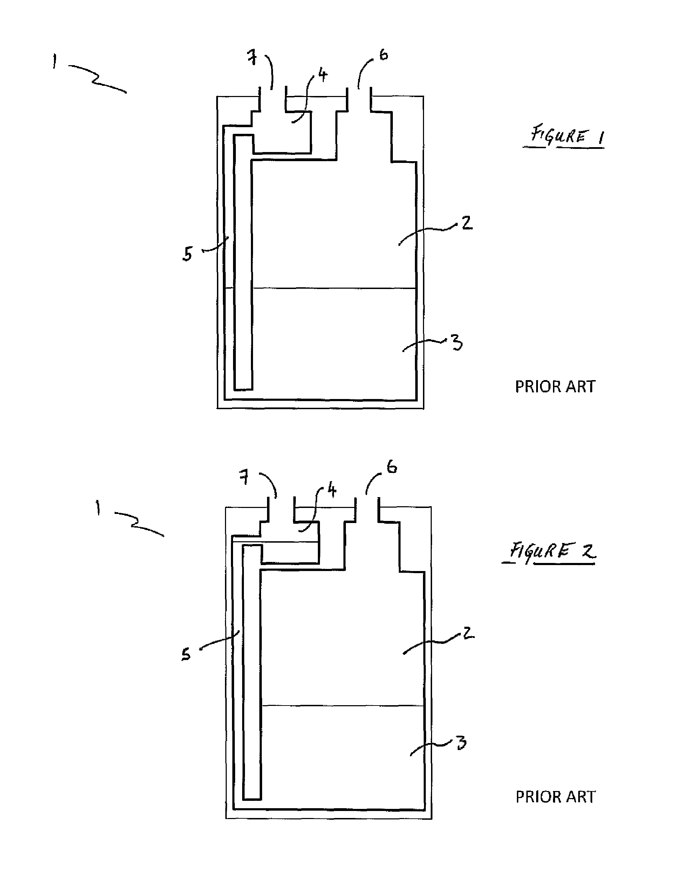

Dispensing bottles for dispensing measured or metered doses of liquids are known in the art and are often used for dispensing products such as cleaning fluids and solutions of horticultural and other chemicals. A typical example of such a container is illustrated in Figures 1 and 2, and generally indicated by 1. The bottles typically comprise a first chamber 2 in which the bulk of the liquid contents 3 is stored. This chamber is in fluid connection with a second measuring chamber 4 by means of an interconnecting pipe 5 between the base of the first chamber and the measuring chamber. The bottle has two outlets: a first outlet 6 which serves to allow filling and refilling of the bottle, and a second dispensing outlet 7 to allow dispensing of the product from the metering chamber 4. These bottles are typically made of resiliently-deformable plastics material, often of a blow-moulded construction.

Once charged with material, the two outlets are sealed, often by use of a threaded screw cap. In order to dispense material from the bottle, the cap on the metering outlet 7 is loosened to allow air to escape, and the bottle is squeezed by the user, forcing liquid 3 up the tube 5 and into the metering chamber 4, as illustrated in Figure 2. When pressure on the bottle is released, the resilient nature of its construction causes air to be drawn back into the main chamber 2 through the opening 7 and down the tube 5. The cap on the dispensing opening 7 may then be removed, and a metered, or measured dose of material poured from the dispensing chamber 4.

Whilst containers such as this have proved popular, they are expensive to transport in their empty state, and the resilient nature of the bottles means that they must be arranged to allow air back into the bottles after dispensing. This has the consequence that air is always in contact with the contents of the bottle, and more particularly, contaminants from the environment may be drawn back into the bottle with the air, after dispensing the first measure of material.

It is amongst the objects of the present invention to attempt a solution to these and other problems.

### Summary of the Invention

Accordingly, the invention provides a dispensing container for operable connection to a pouch, said container comprising: a chamber having a first opening for dispensing material therefrom and a second opening in fluid connection with a conduit; and a pouch connector for hermetically connecting said container to a pouch so that the conduit is in fluid connection with the interior of said pouch. By providing the means to connect a dispensing container to a pouch receptacle, the empty containers become easier and cheaper to transport, and the filling of the chamber is easier, as the required resilience of metered bottles no longer has to be overcome by a user.

Preferably, the pouch connector comprises a pair of convex faces whose ends meet at lines, for hermetic connection within the seam of a seamed pouch. More preferably, the faces of said pouch connector are formed of a weldable plastics material. This allows the dispensing container to be connected to a pouch by interposing it within the seam of a laminated pouch, thereby facilitating assembly of the package. The plastics material chosen may be amenable to e.g. direct thermal welding, ultrasonic welding, radiofrequency welding or the like. Still more preferably, the faces of said pouch connector are provided with welding ribs extending therefrom. This improves the reliability of the heat-welding process used to fix the dispensing container to a pouch.

In any aspect of the invention it is preferred that said pouch connector is located around the periphery of said chamber. In this way, the chamber, when fitted to a pouch, will lie partially within the envelope of the pouch. Amongst the benefits of this is that the pouch and its contents provide a degree of protection to the chamber, in transit, and prevent the chamber from snagging on surrounding articles.

Also in any aspect of the invention it is preferred that the container further comprises a handle, to assist a user in gripping the unit once assembled to a pouch.

Also in any aspect of the invention it is preferred that the first opening of said chamber is provided with an external screw thread, and the container further comprises an internally threaded cap. Other methods of reversibly sealing the first opening are also envisaged, including the use of a snap-on cap, or a separate or integrally-moulded flip-top cap. Such an integrally-moulded cap may be connected to the chamber by use of a living hinge.

The scope of the invention also includes a dispenser comprising a pouch fitted with a dispensing container described herein.

Also included within the scope of the invention is a dispensing container substantially as described herein, with reference to and as illustrated by any appropriate combination of Figures 2-15.

### Brief Description of the Drawings

The invention will be described with reference to the accompanying drawings in which:
Figures 1 and 2 are schematic diagrams of a dosing bottle of the prior art;
Figures 3 - 5 show respectively a perspective view, a cut-away perspective view and a further perspective view of a bottom-mounted container of the present invention;
Figures 6 - 7 show respectively a perspective and partial cut-away view of a further embodiment of a container of the invention;
Figures 8 - 9 are a perspective and exploded view respectively of the embodiment of
Figures 6 - 7;

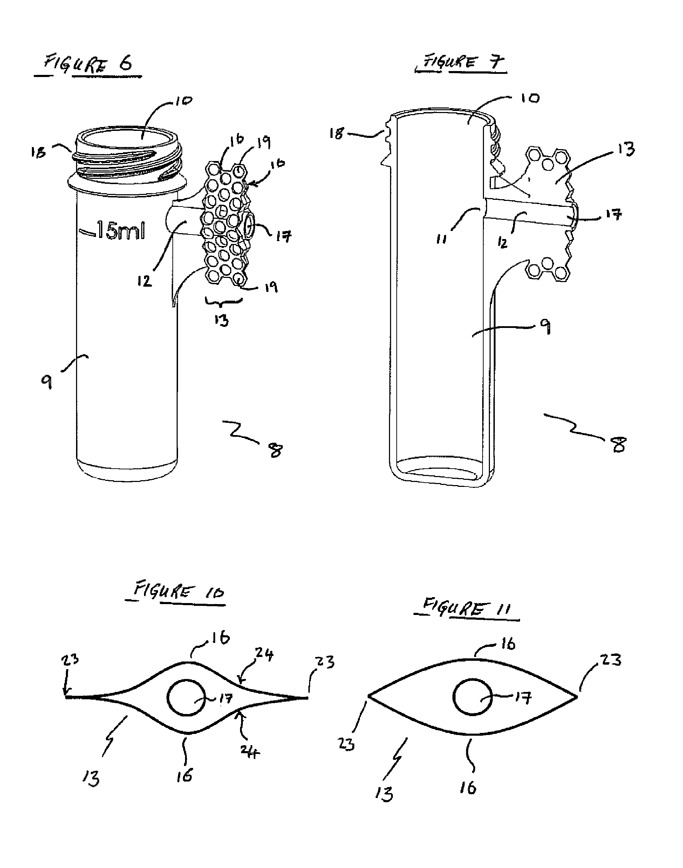

Figures 10 and 11 illustrate end views of two pouch connectors;

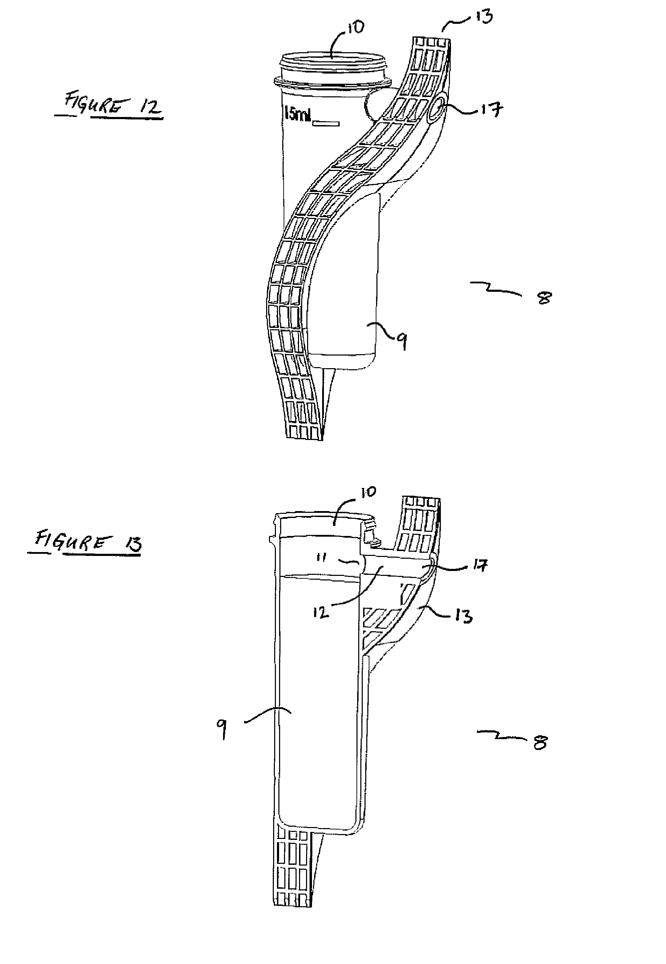

Figures 12 and 13 illustrate respectively perspective and partial cut-away views of a further embodiment of a container of the present invention;

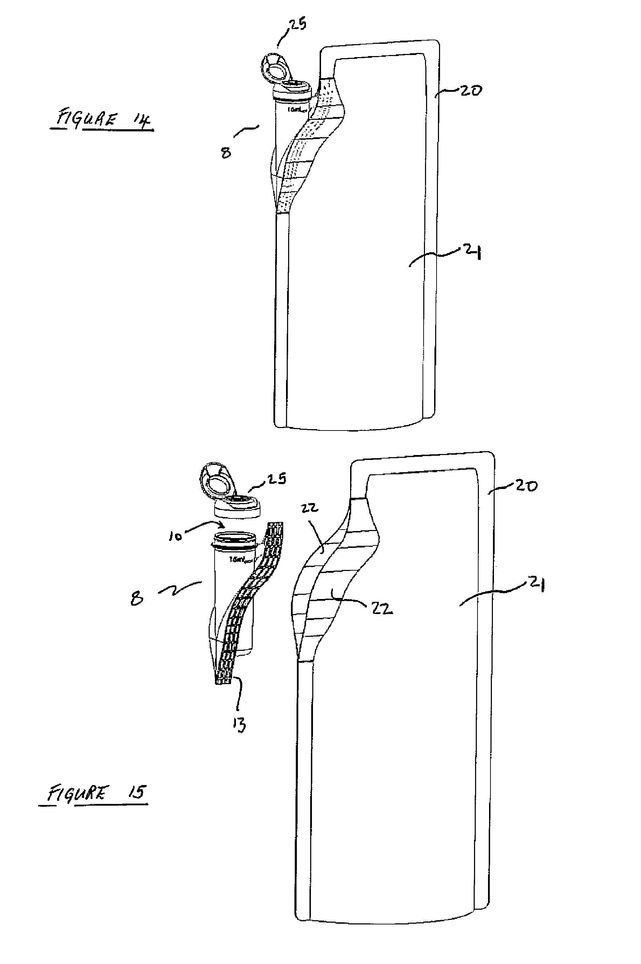

Figures 14 and 15 illustrate perspective and exploded perspective views of the embodiment of Figures 12 - 13 connected to a pouch.

### Description of Preferred Embodiments

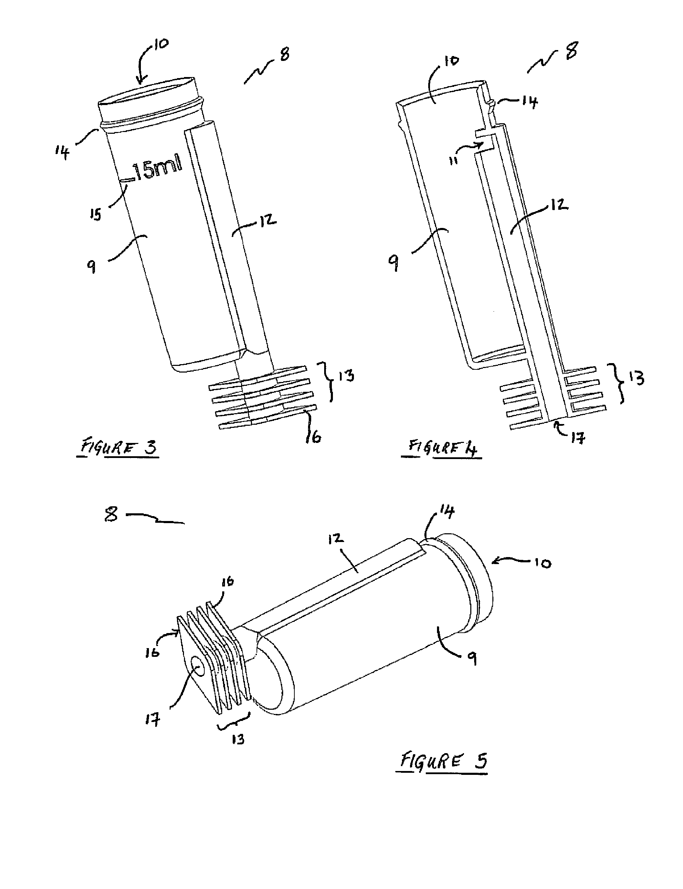

Figure 3 illustrates, in perspective view a dispensing container of the present invention, generally indicated by 8. The container comprises a chamber 9 having a first opening 10 through which material may be dispensed from the chamber, once filled. The chamber has a second opening 11 connected to a conduit 12, through which material may flow, and a pouch connector 13 located at the end of the conduit 12 for hermetically connecting the container to a pouch. The embodiment of Figure 3 is also illustrated in partial cross-section in Figure 4, and in a partial underside view in Figure 5.

The first opening 10 of the container is provided with a snap-connector portion 14 to allow fitting of a cap (not illustrated). This dispensing container is made as a single-piece plastics injection moulding from a transparent material such as polyethylene or polypropylene. The outside of the chamber 9 is provided with indicator line 15 to indicate a predetermined volume, in this case 15ml.

In this embodiment, the conduit 12 is arranged to discharge towards the top (in use) of the chamber 9, and then run down the outside of the chamber towards its base.

In this embodiment, the pouch connector has the form of a sequence of ribs defining pairs of convex faces 16 whose ends meet at a line at the extremities of the faces. The bore of the conduit 12 is connected to a hole 17 located on the pouch connector.

Pouch connectors of this form are known generally in the art and are described for example in US patent application 11/660,060, published as US 2007/0205202.

The chamber 9 is of generally cylindrical form and it, the conduit and the pouch connector are all substantially rigid construction in contrast to the resiliently-deformable materials used in dispensing bottles described above.

The ribs, and therefore the faces 16 of the pouch connector 13 are formed of a weldable plastics material so that the connector may be hermetically sealed between the seam connecting sheets of material forming a pouch.

The embodiment illustrated in Figures 3 - 5 is configured such that it may be located in the top (in use) of a pouch and filled from below. When connected to a pouch, metered, or measured doses of material may be dispensed by loosening any cap fitted to the chamber opening 10, squeezing the pouch so as to urge material through the conduit 12 and into the chamber 9. The use of transparent or translucent material to form the body of the chamber allows the contents to be visualised as they fill the chamber, and squeezing of the pouch may therefore be stopped when sufficient material has been loaded into the chamber. Any cap on the chamber may then be removed, and the measured or metered dose poured from the chamber through the opening 10. Unlike resiliently-deformable materials used in dispensing bottles, very little pressure needs to be exerted on the faces of the pouch to allow material to flow into the chamber. Furthermore, as the pouches are not resilient in their construction, no air needs to be drawn back into the pouch to replace the material that has been transferred back into the dispensing chamber. Furthermore, the pouch may alternatively be rolled up, or folded to dispense the contents into the dispensing container. As pouches may be packed flat when empty, storage and transportation costs are reduced by comparison to the metered dispensing bottles described above.

Figures 6 and 7 show, respectively, perspective and cut-away views of a further embodiment of the invention. In this embodiment, the dispensing container, generally indicated by 8, has a chamber 9 with a first opening 10 for dispensing materials from the chamber. The opening is surrounded by an external screw thread 18 for fitting an internally threaded cap (not illustrated). A second opening 11 located towards the top (in use) of the chamber 9 leads into a conduit 12, terminating in a hole 17.

Surrounding the conduit 12 is a pouch connector 13 comprising 2 opposite faces 16 with a generally convex profile, the ends of which faces meet at lines, to enable the pouch connector 13 to be sealed within the seamed pouch. In this embodiment, a series of wells 19 are formed in the faces of the pouch connector to define a series of interconnected ribs, to aid welding of the pouch connector to a pouch.

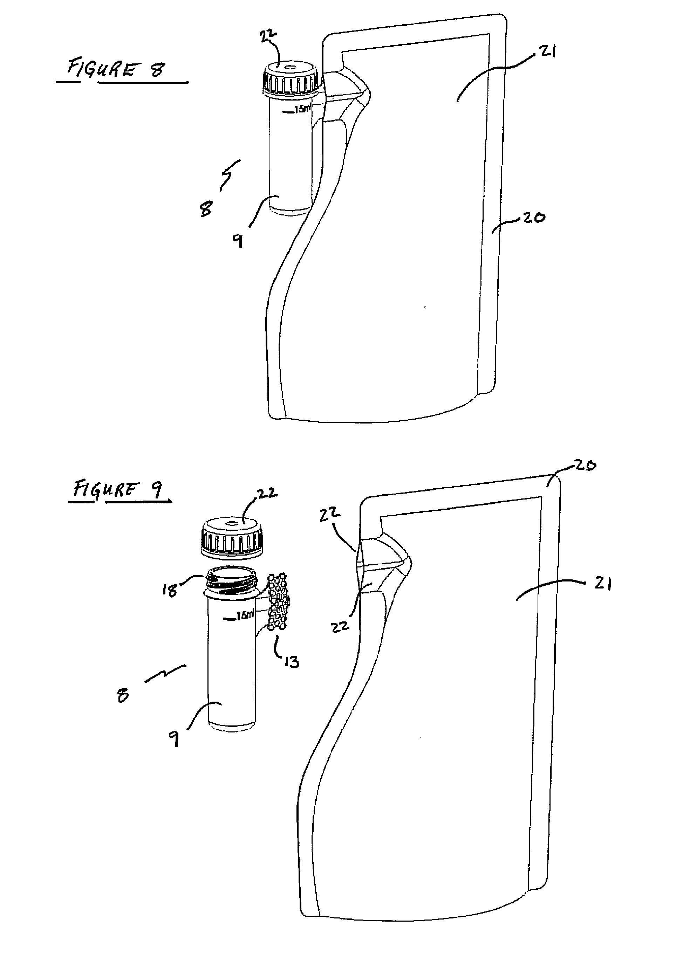

Figure 8 illustrates the dispensing container of Figures 6 -7 fitted within 20 of a pouch 21 a threaded cap 22 is mounted on the external screw thread 18 of the chamber 9.

An exploded view of the arrangement of Figure 8 is illustrated, again in perspective view, in Figure 9 to more clearly illustrate the arrangement of the various components. It can be seen that the dispensing container 8 of this embodiment is adapted to be fitted into a side seam 20 of the pouch 21, and towards the top of the pouch. The pouch 21 is provided with a recessed section in one corner, to accommodate the dispensing container 8 within its overall generally rectangular form.

The exploded view of Figure 9 more clearly illustrates the construction of the pouch 21 being formed of sheet material, heat-laminated to form a seam at its periphery. A dispensing container 8 is fitted to the pouch by inserting the pouch connector 13 between the sheets of material 22 that form the pouch, and heat-welded within the seam to provide a hermetic seal.

Figures 10 and 11 illustrate end views of pouch connectors 13 and an exit hole 17 of a conduit. It can be seen that the connectors comprise a pair of convex faces 16 whose ends meet at lines 23. As well as a convex portion, the embodiment of Figure 10 also incorporates concave sections 24 on the faces of the connector. The important features of the pouch connector are that the faces provide a smooth transition to enable welding to take place to form an effective hermetic seal. For this reason, the region where the two faces 16 meet is relatively thin, to prevent a gap being formed between the two sheets 22 of the pouch construction.

Figures 12 and 13 illustrate, in perspective, and partial cut-away view respectively, a further embodiment of the invention. In this embodiment, the dispensing container again comprises a chamber 9 with a dispensing opening 10 to which a cap (not illustrated) may be fitted. The chamber has a second opening 11 in connection with a conduit 12 leading to an opening 17 for operable connection to the interior space of a pouch to which the container may be connected. A particular feature of this embodiment is that the pouch connector 13 is located around the periphery of the chamber 9 of the container. By configuring the pouch connector in this way, a portion of the chamber 9 of the container will sit within the pouch envelope. This has a number of advantages: firstly, during storage of the filled product, the liquid within the pouch and the pouch itself provide a degree of protection to the chamber against accidental damage, and also prevent extremities of the chamber becoming entangled or snagged on other adjacent items. Secondly, any sediment that might be present within the liquid to be dispensed, will be effectively hidden within the pouch.

Figure 14 illustrates the dispensing container shown in Figures 12 and 13 in place within a pouch, with the pouch connector 13 welded between the seam 20 forming the pouch 21. It can be seen that this configuration results in the container 8 being partially contained within the envelope of the pouch. This Figure also shows the provision of a flip-top cap 25 locatable on the opening 10 of the container.

Figure 15 shows the arrangement of Figure 14 in exploded view to more clearly illustrate the interaction of the heat-weldable pouch connector 13 with the two faces 22 of the sheet used to form the pouch.

## Claims

1. A dispensing container for operable connection to a pouch, said container comprising:
a chamber having a first opening for dispensing material therefrom and a second opening in fluid connection with a conduit; and
a pouch connector for hermetically connecting said container to a pouch so that the conduit is in fluid connection with the interior of said pouch.

2. A container according to claim 1 wherein said pouch connector comprises a pair of convex faces whose ends meet at lines, for hermetic connection within the seam of a seamed pouch.

3. A container according to Claim 2 wherein the faces of said pouch connector are formed of a weldable plastics material.

4. A container according to claim 3 wherein the faces of said pouch connector are provided with welding ribs extending therefrom.

5. A container according to any preceding claim wherein said pouch connector is located around the periphery of said chamber.

6. A container according to any preceding claim further comprising a handle.

7. A container according to any preceding claim wherein the first opening of said chamber is provided with an external screw thread, and the container further comprises an internally threaded cap.

8. A dispenser comprising a pouch fitted with a dispensing container according to any preceding claim.
